Europäisches Patentamt

European Patent Office

Office européen des brevets

(11) Publication number: **0 427 683 A1**

# EUROPEAN PATENT APPLICATION

(21) Application number: 90830444.7

(22) Date of filing: 09.10.90

(51) Int. Cl.5: **B67C 7/00**, B65G 47/51

(30) Priority: 08.11.89 IT 4017189

(43) Date of publication of application:
15.05.91 Bulletin 91/20

(84) Designated Contracting States:
DE FR GB

(71) Applicant: PROCOMAC S.r.l.
Strada Fedolfi

I-43038 Sala Baganza (Parma)(IT)

(72) Inventor: Vanneste, Yvon
Via Ginestra, 9
I-43046 Ozzano Taro (Parma)(IT)

(74) Representative: Lanzoni, Luciano
c/o BUGNION S.p.A. Viale Trento Trieste, 25
I-41100 Modena(IT)

(54) **Equipment for the orderly accumulation of plastic bottles.**

(57) Designed for integration into bottling systems, and in particular those utilizing plastic bottles (8) moulded with a projecting collar around the neck, the equipment operates in response to interruptions or restrictions farther down the production line, and is capable of implementing an ordered procedure whereby the accumulating bottles are diverted in single file from the main air cushion bottling line conveyor (11), transferred sideways by a looped conveyor chain (5) equipped with a plurality of brackets (7), into a bin (16) in successive parallel rows (21), each row comprising a prescribed number of single bottles, and returned ultimately to the line in the same ordered rows once the interruption has been cleared.

fig.1

EP 0 427 683 A1

The present invention relates to equipment for the orderly accumulation of plastic bottles.

Conventional bottling plant utilizing containers fashioned from plastic material will generally incorporate an accumulator facility designed to operate automatically whenever the production line has to shut off for short intervals, for instance in the event of accidents or restrictions in flow occurring at a given point along the line.

In the case of restricted flow at the filling and capping unit, for example, machinery and equipment preceding the filler-and-capper (in the particular instance of plastic bottles, the device by which the empty bottles are set upright) will be forced to shut off, unless the interconnecting conveyors happen to be capable of accommodating the upright bottles for the duration of the ensuing pause. In the case of glass bottles, which remain stable whether full or empty, the problem can be overcome by appropriate proportioning of the width of the conveyors, or alternatively, by installing two-way flow tables adjacent to the conveyors such as will take up and restore bottles continuously from and to the production line according to the output capacity of machine units preceding and following the table location.

Given their poor stability, empty plastic bottles cannot be handled in the manner described above. A flow compensating facility is rendered necessary in bottling plant if for no other reason than that of accommodating the high rates of output afforded by modern blow moulding equipment.

The expedient generally adopted with conventional plastic bottle fillers is to install a conveyor of length substantially longer than would nominally be required, which thus can function not only as a bottle conveyor but also as a flow table.

Such an expedient betrays certain disadvantages, namely: excessive overall length of the plant due to the length of the conveyors; high cost both of installing and of running the air cushion conveying systems, which require generally rather noisy and energy-consuming fan units for their operation. The object of the present invention is to overcome the drawbacks mentioned above, and in particular to provide for an ordered accumulation of bottles in a mechanized bin designed for the purpose, without installing extra lengths of air cushion conveyor, and without the need for numbers of additional fan units to operate such extra lengths of conveyor. The stated object is realized in equipment for the ordered accumulation of plastic bottles according to the invention, which is characterized in that it comprises: a storage bin capable of receiving and returning bottles ordered in a plurality of rows each comprising a predetermined number of bottles; means by which the bottles are collected in an orderly fashion from a linear conveyor, transferred in orderly fashion to the storage bin, and returned in orderly fashion to the linear conveyor.

The invention will now be described in detail, by way of example, with the aid of the accompanying drawings, in which:

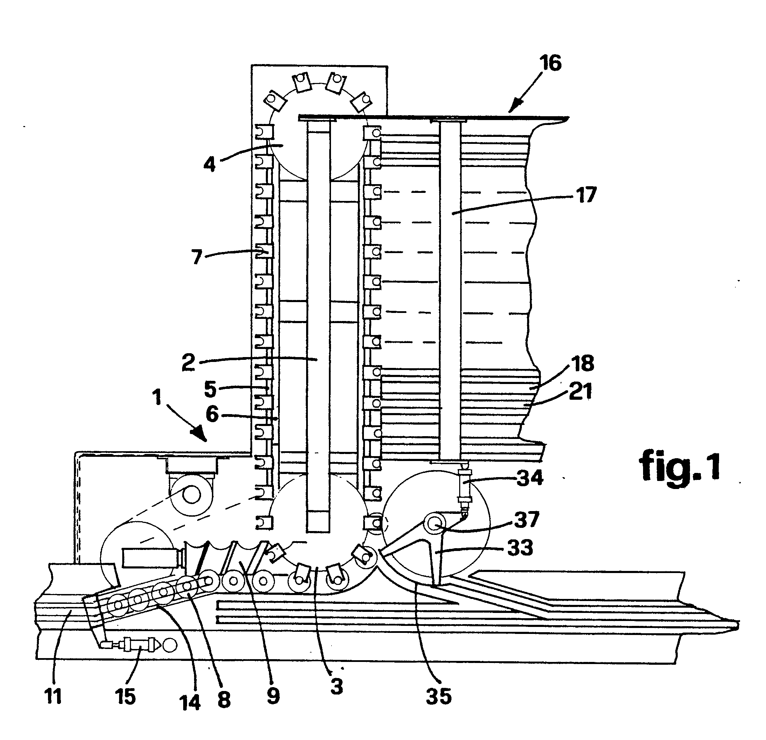

-fig 1 shows the equipment substantially in its entirety, viewed in plan from above;

-fig 2 shows a system of levers by which rows of bottles are transferred between the storage bin and an adjacent conveyor, viewed in side elevation and illustrated in two operating positions, one of which in phantom line;

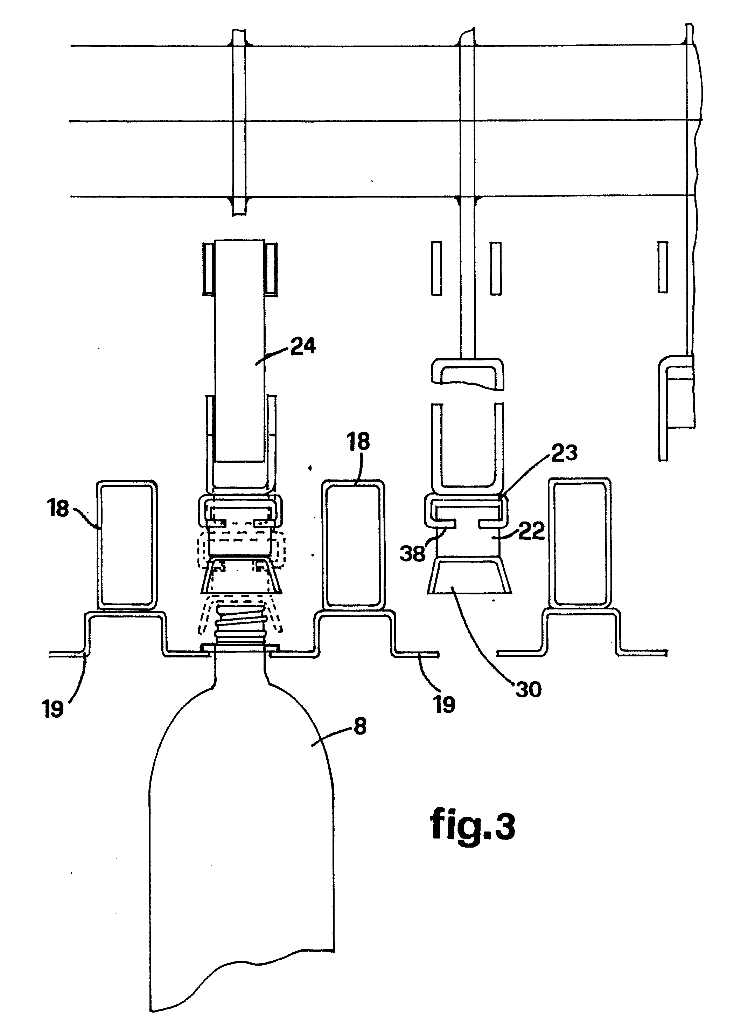

-fig 3 shows a detail of means by which bottles are supported from and engaged at the neck, viewed in frontal elevation and illustrating two operating positions, one of which in phantom line;

-fig 4 is a side elevation of the means by which bottles are collected from and returned to the production line;

-fig 5 illustrates an alternative embodiment of the equipment viewed substantially in its entirety, in plan from above.

With reference to the drawings, 1 denotes a unit, in its entirety, by which bottles 8 are loaded into and unloaded from a storage facility; the frame 2 of this unit supports two sprockets 3 and 4 driving a looped conveyor chain 5 of which the rectilinear branches run against relative plastic guides 6. 7 denotes one of a plurality of brackets fitted to the conveyor 5, spaced apart at intervals equal to a multiple of the chain pitch, a bottom projection of which is designed to support one bottle 8 by the neck.

The unit 1 further comprises two screw feeders 9 positioned one above the other, the purpose of which is to space the bottles apart at a required pitch on entry. 10 denotes a disc, adjustable for height according to the size of bottle handled, by which the bottles themselves are supported during their passage from the air cushion conveyor 11 of the production line to the first bracket 7 encountered.

The disc 10, one sprocket 3, and a star wheel 12 by which the bottles are directed onto the chain loop, are all supported by a shaft denoted 13.

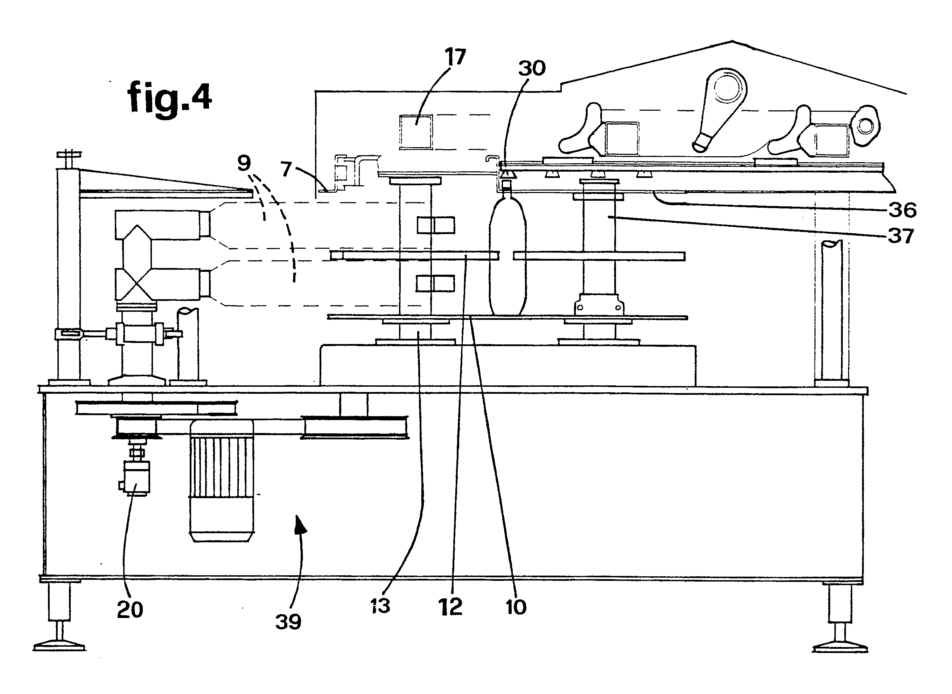

The load/unload unit 1 is set in motion by a system denoted 39 (fig 4) comprising gears, angle drives, timing belts, variable speed brake motors and an angular distance transducer 20.

The linear air cushion conveyor 11 is fitted with a diverter 14, operated by a pneumatic cylinder 15 and serving to direct bottles into the load/unload unit 1 that would normally proceed straight along the conveyor 11 itself.

33 denotes a second diverter, operated by way of a relative pneumatic cylinder 34 and carrying a guide sector 35 mounted substantially concentric with a further disc 36 supported by a relative shaft 37, by which bottles caused through the agency of a system of levers to exit from a mechanized storage bin 16 are guided back toward the air cushion conveyor 11, hence back onto the production line.

The sprockets 3 and 4, chain loop 5 and brackets 7, the screw feeders 9, the disc 10 and star wheel 12, the diverters 14 and 33, their relative pneumatic cylinders 15 and 34 and the levers associated with the storage bin 16, all combine to provide means by which plastic bottles 8 can be collected in orderly fashion from the linear conveyor, transferred in orderly fashion to the storage bin and returned to the linear conveyor, again in orderly fashion. The storage bin 16 is embodied essentially as a horizontal frame with tubular cross-members 17, longitudinal members 18, and members 19 of 'omega' section mounted one to each longitudinal member 18, parallel one with the next and spaced apart at a distance matching that which separates adjacent brackets 7 of the conveyor chain 5; more exactly, the omega-section members 19 are aligned with the chain horizontally so as to afford edges departing and extending continuously from the position of the brackets, from which to suspend the bottles.

The bin 16 comprises a plurality of channels 21, each accommodating an axially aligned bar 22 of substantially rectangular section carried slidably by at least two hangers 23 engaging in longitudinal grooves 38 afforded by the bar itself.

The system of levers associated with the storage bin 16 comprises a plurality of first levers 24, pivotably anchored to respective cross-members 17, each hinged at one end to a corresponding hanger 23 and by the remaining end to a rod 25 that connects ultimately with a crank 31 mounted rigidly to a first hollow shaft 26 of which the rocking motion determines vertical movement of the bars 22 through a prescribed distance.

The system of levers further comprises a second shaft 27 supporting a plurality of second levers 28 articulated with relative connecting rods 32, each of which attached in turn to an element 32 rigidly associated with each bar 22; the rocking motion of the second shaft 27 determines horizontal movement of the bars 22 through a prescribed distance. The vertical and horizontal movements in question are generated by a plurality of pneumatic actuators (conventional in embodiment, and therefore not illustrated).

30 denotes one of a plurality of sockets 30 carried by each bar 22, which are spaced apart at identical distance one from the next and of proportions such as to accommodate the topmost extremity of a single bottle neck.

During normal operation of the bottling production line, the bottles will proceed undiverted along the air cushion conveyor 11.

In the event of a restriction or stoppage occurring at a point down the line beyond the storage bin 16, the air cushion diverter 14 is operated to direct a predetermined number of bottles (counted off by the transducer 20) by way of the load/offload unit 1 into the storage bin 16, whereupon the system of levers will take up the bottles row by row, each row comprising a predetermined number of bottles; conversely, when normal operation of the machinery is resumed down the line, the chain 5 will turn in the opposite direction to release the accumulated bottles row by row back onto the conveyor 11.

Operation of the system of levers associated with the storage bin 16 can be summarized in certain distinct steps:

a) rotation of the first levers 24 to the position whereby the bars 22 lie at the lower level with the necks of the bottles inserted into the sockets 30, and of the second levers 28 to the position whereby the bars 22 are immediately alongside the chain 5, such that a socket 30 also descends on each bottle of the row currently occupying the chain;

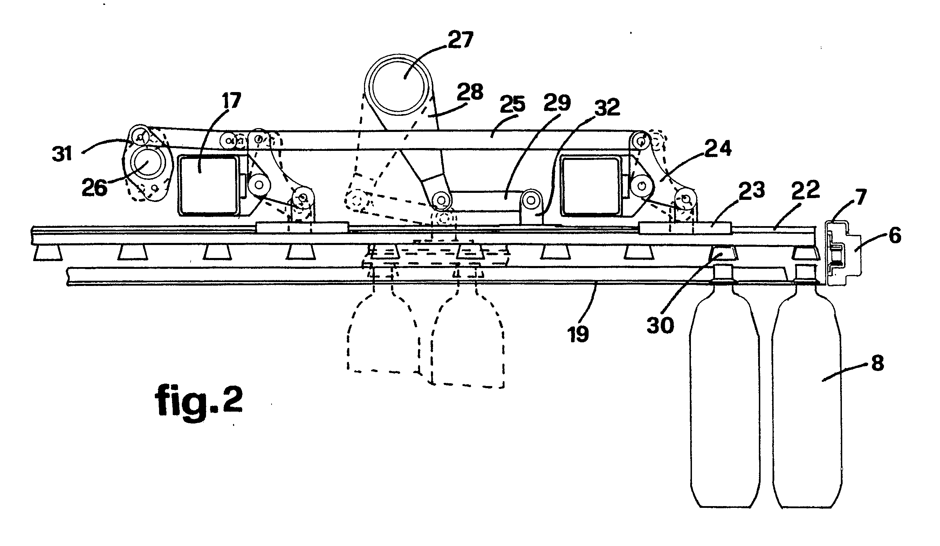

b) rotation of the second shaft 27, in such a way as to distance the second levers 28 from the chain (phantom line, fig 2), with the result that the row of bottles currently occupying the chain is drawn into the bin and the rows already occupying the bin are shifted one place deeper;

c) rotation of the first levers 24 to elevate the bars 22, and with them, the sockets 30;

d) rotation of the second shaft 27, hence of the second levers 28, back to the position immediately alongside the chain 5 (bold line, fig 2), thereby positioning the sockets 30 in readiness to descend on a further row of bottles.

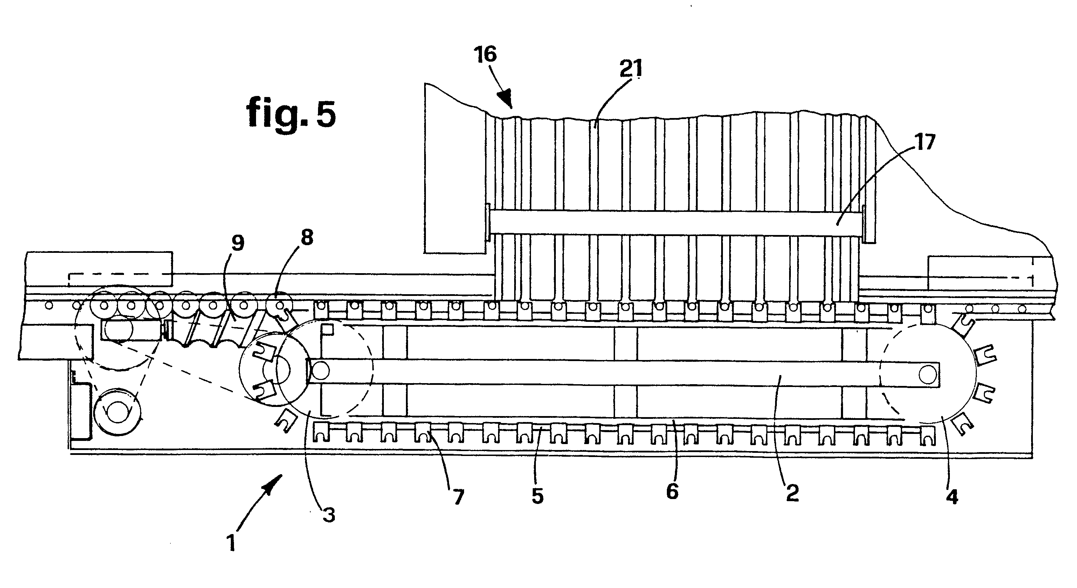

Fig 5 illustrates an alternative embodiment of the present invention, in which the channels 21 of the storage bin 16 are disposed substantially at right angles to the air cushion conveyor 11, whereas the load/unload unit 1 is set substantially parallel to the conveyor. Thus, to advantage, bottles can be taken into and released from the bin 16 with the conveyor chain 5 rotating in one direction only and the unloading diverter 33 is rendered unnecessary. In addition, the storage bin 16 might comprise a plurality of springs, fastened to the omega-section members 19 carried by the longitudinal members of the frame, serving to ensure faultless stability of the bottles during the steps of operation in which the sockets are distanced from the bottle necks. In another alternative embodiment (not illustrated) the sockets 30 might be replaced by pins insertable into the necks of the bottles.

## Claims

1) Equipment for the ordered accumulation of plastic bottles,
characterized
in that it comprises:
-a storage bin (16) capable of receiving and returning bottles (8) ordered in a plurality of rows each consisting in a predetermined number of bottles;
-means by which bottles are collected in an orderly fashion from a linear conveyor (11), transferred in orderly fashion to the storage bin, and returned in orderly fashion to the linear conveyor.

2) Equipment for the ordered accumulation of plastic bottles as in claim 1, wherein means by which bottles are collected in an orderly fashion from a linear conveyor, transferred in orderly fashion to the storage bin and returned in orderly fashion to the linear conveyor comprise two sprockets (3, 4) driving a looped conveyor chain (5) furnished with a plurality of brackets (7) each supporting one bottle by the neck, screw feeders (9), a disc (10) by which the bottles are supported during passage from the linear conveyor (11) to a star wheel (12) operating in conjunction with the chain (5), two diverters (14, 33) operated by pneumatic cylinders (15, 34), and a system of levers associated with the storage bin.

3) Equipment for the ordered accumulation of plastic bottles as in preceding claims, wherein the storage bin (16) is embodied substantially as a frame carrying a plurality of omega section members (19) and affording a plurality of channels (21) each axially accommodating a bar (22) carried slidably in a plurality of hangers (23) and capable of vertical and horizontal movement controlled by the system of levers associated with the bin.

4) Equipment for the ordered accumulation of plastic bottles as in preceding claims, wherein the system of levers asscociated with the bin (16) comprises a plurality of first levers (24) connecting by way of rods (25) and cranks (31) with a first shaft (26) of which the rocking motion controls the vertical movement of the bars (22), and a plurality of second levers (28) and rods (29) connecting with respective elements (32) rigidly associated with the bars (22) and operated by a second shaft (27) of which the rocking motion controls the horizontal movement of the bars.

5) Equipment for the ordered accumulation of plastic bottles as in preceding claims, further comprising a plurality of sockets (30) associated with the underside of each bar (22) of the storage bin (16) and spaced apart at equal distance one from the next, into which the necks of a bottles (8) are singly insertable at their topmost extremity.

6) Equipment for the ordered accumulation of plastic bottles as in claim 1, wherein bottles (8) are transferred to the storage bin (16) suspended by the neck, spaced apart at equal distance one from the next, and received into channels (21) pending a similarly ordered return to the linear conveyor.

7) Equipment for the ordered accumulation of plastic bottles as in preceding claims and in conjunction with an air cushion conveyor (11), wherein the channels (21) of the storage bin (16) are disposed substantially parallel to the conveyor (11), and substantially perpendicular to a load-and-unload unit (1) constituting part of the means by which bottles are collected, transferred and returned in an orderly fashion.

8) Equipment for the ordered accumulation of plastic bottles as in claim 1, wherein the storage bin (16) comprises a plurality of modular units, in such a way as to permit of varying the dimensions of the bin, hence the total number of bottles that can be accommodated therein.

9) Equipment for the ordered accumulation of plastic bottles as in claims 1, 2 and 3 and in conjunction with an air cushion conveyor (11), wherein the channels (21) of the storage bin (16) are disposed substantially perpendicular to a load-and-unload unit (1) positioned substantially parallel to the conveyor (11) and constituting a part of the means by which bottles are collected, transferred and returned in an orderly fashion.

10) Equipment for the ordered accumulation of plastic bottles as in claims 1 and 2, further comprising a plurality of springs associated with the omega-section members (19) mounted to the longitudinal frame members (18) of the storage bin and serving to ensure faultless stability of the bottles (8) during the steps of operation in which the topmost extremities of the bottle necks are not inserted in the sockets (30).

fig.1

fig.2

fig.3

# fig.4

EP 0 427 683 A1

**fig. 5**

European
Patent Office

EUROPEAN SEARCH
REPORT

Application Number

EP 90 83 0444

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 310 102 (ETABLISSEMENT NEU) <br> * Abstract; figures 1,2 * <br> — — — | 1 | B 67 C 7/00 <br> B 65 G 47/51 |
| A | US-A-3 669 241 (C. CHALICH) <br> * Column 2, lines 34-40,63-71; column 3, lines 1-11; column 5, lines 36-50; figures 1-4 * <br> — — — | 1 | |
| A | US-A-4 635 784 (R.D. BOURGEOIS) <br> * Abstract; figures 1,2 * <br> — — — | 1 | |
| A | US-A-4 499 987 (C.P. LONG) <br> * Abstract; figure 1 * <br> — — — — — | 1 | |

TECHNICAL FIELDS
SEARCHED (Int. Cl.5)

B 67 C
B 65 G

The present search report has been drawn up for all claims

| Place of search | Date of completion of search | Examiner |
|---|---|---|
| The Hague | 25 January 91 | VAN DEN BOSSCHE E.J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document